# EUROPEAN PATENT SPECIFICATION

(11) **EP 1 331 373 B1**
(45) Date of publication and mention of the grant of the patent: **30.11.2005**
(21) Application number: 03001776.8
(22) Date of filing: 28.01.2003
(51) Int. Cl.: B01D 53/94, F01N 3/20, F02M 61/18

(54) **Reductant supply system**
Versorgungssystem eines Reduktionsmittels
Système d'alimentation d'un réducteur

(30) Priority: 29.01.2002 JP 2002020127
(43) Date of publication of application: 30.07.2003
(73) Proprietor: Toyota Jidosha Kabushiki Kaisha, Toyota-shi, Aichi-ken 471-8571 (JP)
(72) Inventor: Itoh, Kazuhiro, Toyota-shi, Aichi-ken, 471-8571 (JP)
(74) Representative: TBK-Patent

(56) References cited:
- EP-A- 0 558 452
- PATENT ABSTRACTS OF JAPAN vol. 1997, no. 10, 31 October 1997 (1997-10-31) & JP 09 150038 A (NIIGATA ENG CO LTD), 10 June 1997 (1997-06-10)
- PATENT ABSTRACTS OF JAPAN vol. 017, no. 321 (C-1072), 18 June 1993 (1993-06-18) & JP 05 031327 A (MITSUBISHI HEAVY IND LTD), 9 February 1993 (1993-02-09)

## Description

### BACKGROUND OF THE INVENTION

### 1. Field of the Invention

The invention relates to a reductant supply system for supplying a reductant to a NOx catalyst.

### 2. Description of the Related Art

A recently known means for reducing the amount of nitrogen oxides (NOx) present in exhaust gas from an internal combustion engine capable of lean-burn operation is a lean NOx catalyst such as a selective reduction type NOx catalyst, storage-reduction type NOx catalyst, etc.

The selective reduction type NOx catalyst is a catalyst that causes reduction or decomposition of nitrogen oxides (NOx) when a reductant is present in an excess oxygen atmosphere. This type of catalyst includes catalysts formed by loading a zeolite support with a transition metal, such as Cu or the like, catalysts carrying titania/vanadium, catalysts formed by loading a zeolite or alumina support with a noble metal, etc.

In order to remove nitrogen oxides (NOx) through the use of such a selective reduction NOx catalyst, it is necessary to provide an appropriate amount of a reductant. An existing technology uses hydrocarbon (HC), an ammonium-derived compound, or the like, as such a reductant.

The storage-reduction type NOx catalyst is a catalyst that absorbs nitrogen oxides (NOx) from inflow exhaust gas when the oxygen concentration in the exhaust gas is high, and that reduces the stored nitrogen oxides (NOx) into nitrogen (N₂) when the oxygen concentration in inflow exhaust gas is low and a reductant is present.

Generally, lean NOx catalysts, including the selective reduction type NOx catalysts, the storage-reduction type NOx catalysts, etc., become able to remove nitrogen oxides (NOx) from exhaust gas in the presence of a reductant. Therefore, in order to remove nitrogen oxides (NOx) from exhaust gas through the use of a lean NOx catalyst, it is necessary to supply an appropriate amount of reductant to the lean NOx catalyst.

A method for supplying a reductant into exhaust gas is addition of a reductant into exhaust gas. The addition of a reductant is performed by injecting the reductant into exhaust gas via a reductant injection nozzle. However, since the reductant injection nozzle is always exposed to exhaust gas, heat from exhaust gas solidifies the reductant remaining in the injection nozzle in some cases so that the reductant injection nozzle may be clogged.

In view of this problem, the technology described in Japanese Patent Application Laid-Open Publication No. 9-150038 injects water for a predetermined time before or after injection of aqueous urea solution. The injection of water washes the solidified urea out of the reductant injection nozzle, thereby substantially preventing the clogging of the reductant injection nozzle.

However, in order to inject water from the reductant injection nozzle, there is a need to provide a water supply system besides the reductant supply system, thus resulting in a complicated and increased-size apparatus. Furthermore, if a NOx catalyst loaded with vanadium is incorporated, there is a danger that vanadium may be eluted by water injected to prevent the clogging of the reductant injection nozzle, and therefore the catalyst capability may decline.

Document EP-A-0 558 452 discloses a reductant supply system comprising a catalyst which can be provided in the exhaust passage of an internal combustion engine facilitating the reduction of nitrogen oxides and the presence of a reductant. A reductant supply device is provided which supplies the reductant to the catalyst. Furthermore, a clogging estimating means for estimating a possible clogging of the injection hole used for the injection of the reductant is provided. The reductant is injected into an air system and is reduced into the catalyst together with the mentioned pressurized air.

This reductant supply system is further provided with a clogging estimation means which is able to monitor the volume of the air stream and, in case that the air stream drops to a minimum value, to stop the further injection of the reductant to avoid a complete clogging of the injection hole. In case of a clogging, it is tried to clear the injection hole by blowing pressurized air into the injection hole. If it is not possible to clear the injection hole by pressurized air, the injection system shall be dismantled and the injection hole shall be mechanically cleared by certain tools. Thus, if a clogging is estimated, the introduction of the reductant is stopped and pressurized air is used to clear the injection hole. If a clearing by pressurized air is not possible, a tool shall be used for a mechanical clearing.

### SUMMARY OF THE INVENTION

The invention has been accomplished in order to solve the aforementioned problems. It is an object of the invention to prevent the clogging of the reductant injection nozzle in a reductant supply apparatus.

In order to achieve the aforementioned object, a reductant supply system according to claim 1 is provided.

That is, a reductant supply system comprising a NOx catalyst that is provided in an exhaust passage of an internal combustion engine and that facilitates reduction of a nitrogen oxide in the presence of a reductant, and a reductant supply device that supplies the reductant to the NOx catalyst, is characterized by further comprising:

clogging estimation means for estimating a clogging timing at which an injection hole of the reductant supply device is clogged; and

clogging control means for controlling the clogging of the injection hole by injection of the reductant from the reductant supply device in accordance with the clogging timing estimated by the clogging estimation means.

A major feature of the invention is that the timing at which clogging will be caused by the reductant deposited in the injection hole is estimated by the clogging estimation means, and that in accordance with the clogging timing estimated by the clogging estimation means, the reductant is injected from the reductant supply device so that the injection hole will not be clogged.

In the reductant supply device constructed as described above, the reductant sometimes remains in the injection hole when the reductant is supplied to the NOx catalyst. The reductant residues tend to solidify in the injection hole due to evaporation of moisture and the like caused by heat from exhaust gas. Thus, there is a danger of the injection hole being clogged by solidification of the reductant.

In the reductant supply system constructed as described above, however, the reductant is injected from the reductant supply device in accordance with the clogging timing estimated by the clogging estimation means. Therefore, it becomes possible to eliminate the problem of the clogging of the injection hole.

According to a preferred form of the invention, the clogging control means may be clogging prevention means for injecting a small amount of the reductant for substantially preventing the clogging of the injection hole prior to the clogging timing estimated by the clogging estimation means.

According to the reductant supply system constructed as described above, the timing at which clogging will be caused by the reductant deposited in the injection hole is estimated by the clogging estimation means, and the reductant supply device is caused to inject a small amount of the reductant before the clogging occurs. Therefore, the clogging can be substantially prevented by washing the deposited reductant out of the injection hole.

Examples of the reductant include hydrocarbon, urea, ammonium carbamate, etc.

According to another preferred form of the invention, the clogging control means may be clogging resolving means for injecting an amount of the reductant that is greater than a usual amount if the reductant is supplied after the clogging timing estimated by the clogging estimation means.

In the reductant supply device constructed as described above, the reductant sometimes remains in the injection hole when the reductant is supplied to the NOx catalyst. The reductant residues tend to solidify in the injection hole due to evaporation of moisture and the like or carbonization of the reductant residues caused by heat from exhaust gas. Thus, there is a danger of the injection hole being clogged by solidification of the reductant.

However, the reductant deposited in the injection hole can be removed even after the reductant has solidifies, by injecting the reductant via the injection hole for a long time. Therefore, the solidified reductant can be removed by injecting a greater-than-usual amount of the reductant after the clogging timing estimated by the clogging estimation means.

According to still another preferred form of the invention, the clogging control means may be clogging resolving mean for injecting the reductant at a pressure that is higher than a usual pressure if the reductant is supplied after the clogging timing estimated by the clogging estimation means.

In the reductant supply device constructed as described above, the reductant sometimes remains in the injection hole when the reductant is supplied to the NOx catalyst. The reductant residues tend to solidify in the injection hole due to evaporation of moisture and the like or carbonization of the reductant residues caused by heat from exhaust gas. Thus, there is a danger of the injection hole being clogged by solidification of the reductant.

However, the reductant deposited in the injection hole can be washed out even after the reductant has solidifies, by injecting the reductant via the injection hole at an increased pressure of the reductant. Therefore, it becomes possible to remove the solidified reductant by injecting the reductant at an increased pressure after the clogging timing estimated by the clogging estimation means.

According to a further form of the invention, the clogging estimation means may estimate that the injection hole will be clogged, if an elapsed time following a last injection of the reductant from the reductant supply device reaches at least a predetermined time.

According to the clogging estimation means, the timing of clogging of the injection hole can be estimated on the basis of the elapsed time following the last injection of the reductant via the injection hole, because the reductant in the injection hole solidifies due to evaporation of moisture and the like or carbonization of the reductant residues as time elapses.

According to a further form of the invention, the reductant supply system may further comprise, exhaust gas temperature measurement means for measuring a temperature of exhaust gas, and exhaust gas temperature integration means for integrating exhaust gas temperatures measured by the exhaust gas temperature measurement means.

With this construction, the clogging estimation means may estimate that the injection hole will be clogged, if an integrated value of exhaust gas temperature following a last injection of the reductant from the reductant supply device reaches at least a predetermined value.

The time needed for solidification of the reductant varies depending on the temperature of exhaust gas to which the reductant is exposed, and the time of exposure to exhaust gas. The reductant is more likely to solidify if the temperature of exhaust gas is higher and the time of exposure is longer. Therefore, according to the clogging estimation means, the timing of clogging of the injection hole can be estimated on the basis of the integrated value of exhaust gas temperature following the last injection of the reductant.

According to a further form of the invention, the reductant supply device may comprise a valve that opens at the time of supply of the reductant so as to deliver the reductant, a sac in which the reductant is temporarily stored after passing through the valve, and received heat quantity computation means for computing an integrated value of heat quantity received by the reductant remaining in the sac.

With this construction, the clogging estimation means may estimate that the injection hole will be clogged, if the integrated value of heat quantity received by the reductant remaining in the sac following a last injection of the reductant from the reductant supply device reaches at least a predetermined value.

In the reductant supply device constructed as described above, the reductant is temporarily stored in the sac when the valve provided in the injection hole is opened. If the sac is filled with the reductant, the pressure of the reductant stored in the sac rises, and the reductant is injected through the injection hole. After that, as the valve is closed, the pressure of the reductant stored in the sac gradually decreases to a pressure substantially equal to the pressure of exhaust gas. Thus, the injection of the reductant ends. Thus, the time for solidification of the reductant has a correlation with the heat quantity that the reductant remaining in the sac receives after the last injection of the reductant through the injection hole. The received heat quantity computation means can compute the heat quantity received by the reductant remaining in the sac, and the clogging estimation means can estimate the timing of clogging of the injection hole based on the heat quantity received by the reductant remaining in the sac.

According to a further form of the invention, it is also possible to further provide exhaust gas temperature measurement means for measuring a temperature of exhaust gas, exhaust gas flow measurement means for measuring an amount of flow of exhaust gas, and exhaust gas temperature integration means for integrating exhaust gas temperatures measured by the exhaust gas temperature measurement means.

With this construction, the clogging estimation means may estimate the clogging of the injection hole based on the amount of flow of exhaust gas and an integrated value of exhaust gas temperature following a last injection of the reductant from the reductant supply device reaches at least a predetermined value.

The reductant deposited in the injection hole causes the clogging of the injection hole due to evaporation of moisture and the like or carbonization of the reductant residues depending on exhaust gas temperature. The reductant deposited in the injection hole solidifies earlier and therefore causes the clogging earlier if higher temperature of exhaust gas continues and the amount of flow of exhaust gas is greater, because of acceleration of the evaporation of moisture and the like contained in the reductant remaining in the sac. Thus, there is a correlation of the timing of clogging of the injection hole with the integrated value of temperature of exhaust gas and the amount of flow of exhaust gas. Therefore, it is possible to estimate the timing of clogging of the injection hole based on the temperature of exhaust gas and the amount of flow of exhaust gas.

According to a further form of the invention, the reductant supply device may comprise a valve that opens at the time of supply of the reductant so as to deliver the reductant, reductant pressure measurement means for measuring a pressure of the reductant upstream of the valve, and reductant pressure integration means for integrating the pressure measured by the reductant pressure measurement means.

With this construction, the clogging estimation means may estimate that the injection hole will be clogged, if the integrated value of the pressure following a last injection of the reductant from the reductant supply device reaches at least a predetermined value.

In the reductant supply device constructed as described above, the reductant leaks despite closure of the valve in some cases. Similar to the injected reductant, the leaking reductant causes the clogging of the injection hole. The amount of leakage of the reductant has a correlation with the integrated value of pressure of the reductant. Therefore, it becomes possible to estimate the amount of leakage of the reductant by determining an integrated value of pressure of the reductant, and estimate the timing of clogging of the injection hole based on the amount of leakage of the reductant.

### BRIEF DESCRIPTION OF THE DRAWINGS

The above and other objects, features, advantages, technical and industrial significance of this invention will be better understood by reading the following detailed description of preferred embodiments of the invention, when considered in connection with the accompanying drawings, in which:
FIG. 1 is a schematic illustration of the construction of an internal combustion engine and an exhaust system thereof to which the reductant supply apparatus of the invention is applied;
FIG. 2 is a schematic sectional view of an exemplary construction of a distal end portion of a reductant injection valve;
FIG. 3 is a schematic sectional view of another exemplary construction of a distal end portion of the reductant injection valve;
FIG. 4 is a time chart indicating time-dependent transition of the reductant addition signal supplied to the reductant injection valve in a first embodiment of the invention;
FIG. 5 is a time chart indicating time-dependent transitions of the reductant addition signal supplied to the reductant injection valve and the temperature of exhaust gas in a second embodiment of the invention.
FIG. 6 is a time chart indicating time-dependent transitions of the reductant addition signal supplied to the reductant injection valve and the clogging index in a third embodiment of the invention; and
FIG. 7 is a diagram indicating a relationship between temperature and the substances into which urea changes depending on temperature in a sixth embodiment of the invention.

### DESCRIPTION OF THE EXEMPLARY EMBODIMENTS

In the following description and the accompanying drawings, the present invention will be described in more detail in terms of exemplary embodiments.

### <FIRST EMBODIMENT>

Specific embodiments of the reductant supply apparatus of the invention will be described hereinafter with reference to the drawings. An exemplary embodiment in which the reductant supply apparatus of the invention is applied to a vehicle-driving diesel engine will be described below.

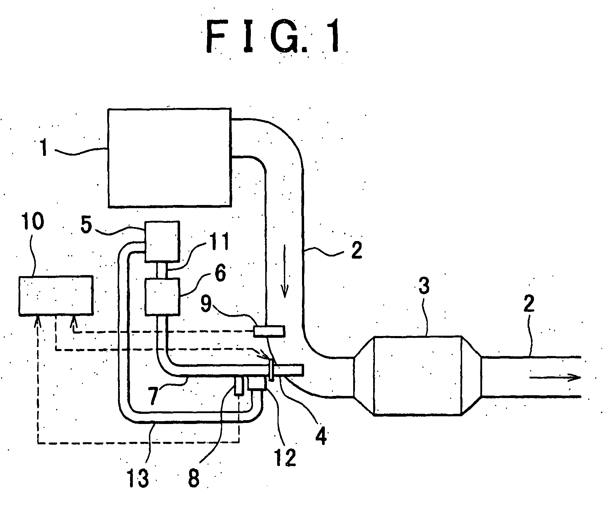

FIG. 1 is a schematic illustration of the construction of an internal combustion engine and an exhaust system thereof to which the reductant supply apparatus of the invention is applied.

An internal combustion engine 1 shown in FIG. 1 is a four-cycle diesel engine. An exhaust pipe 2 is connected to the internal combustion engine 1. The exhaust pipe 2 is connected at its downstream end to a muffler (not shown). A selective reduction NOx catalyst 3 that uses urea as a reductant is disposed in an intermediate portion of the exhaust pipe 2. Disposed in the exhaust pipe 2 upstream of the selective reduction NOx catalyst 3 is a reductant injection valve 4 for dispensing urea as a reductant to the selective reduction NOx catalyst 3. Disposed upstream of the selective reduction NOx catalyst 3 is an exhaust temperature sensor 9 that outputs an electric signal corresponding to the temperature of exhaust gas flowing in the exhaust pipe 2.

In the thus-constructed exhaust system, mixture gas (burned gas) produced as a result of combustion in each cylinder of the internal combustion engine 1 is discharged into the exhaust pipe 2 via exhaust ports, and flows into the selective reduction NOx catalyst 3, whereby harmful gas components in exhaust gas are removed. After the removal of harmful gas components by the selective reduction NOx catalyst 3, exhaust gas is let out into the atmosphere via the muffler.

The selective reduction NOx catalyst 3 performs selective reduction with urea supplied as a reductant to the catalyst.

Examples of the selective reduction NOx catalyst include catalysts formed by loading a zeolite support with a transition metal, such as Cu or the like, catalysts carrying titania/vanadium, etc. Examples of the selective reduction NOx catalyst further include catalysts formed by loading a zeolite or alumina support with a noble metal.

A reductant supply apparatus in accordance with this embodiment will next be described. The reductant injection valve 4 is electrically connected to an electronic control unit (EUC) 10, and injects the reductant on the basis of a signal from the ECU 10. Urea as the reductant is stored in the form of an aqueous solution in a reductant storage tank 5. The reductant storage tank 5 is connected to a reductant ejection pump 6 via a reductant suction passage 11. The reductant ejection pump 6 is connected to the reductant injection valve 4 via a reductant supply passage 7. The reductant supply passage 7 between the reductant injection valve 4 and the reductant ejection pump 6 is provided with a pressure regulator 12 that automatically opens when the pressure of the reductant reaches a predetermined pressure, and a reductant pressure sensor 8 that outputs a signal corresponding to the pressure of the reductant in the reductant supply passage 7. The pressure regulator 12 is connected to the reductant storage tank 5 via a return pipe 13.

In the reductant supply apparatus constructed as described above, the reductant ejection pump 6 draws the reductant from the reductant storage tank 5 via the reductant suction passage 11. The reductant drawn into the reductant ejection pump 6 is ejected into the reductant supply passage 7. When the pressure of the reductant supply passage 7 rises to the predetermined pressure, the pressure regulator 12 opens, so that the reductant flows into the return pipe 13. Thus, the reductant is returned to the reductant storage tank 5. In this manner, the pressure of the reductant in the reductant supply passage 7 is kept at a constant level. When the reductant injection valve 4 opens in response to the signal from the ECU 10, the reductant is injected into exhaust gas. After injected into exhaust gas, the reductant flows into the selective reduction NOx catalyst 3 together with exhaust gas.

The internal combustion engine 1 constructed as described above is provided with the ECU 10 for controlling the internal combustion engine 1. The ECU 10 is a unit that controls the state of operation of the internal combustion engine 1 in accordance with the operational condition of the internal combustion engine 1 and a request from a driving person.

The ECU 10 is connected to various sensors such as the reductant pressure sensor 8, the exhaust temperature sensor 9, etc., via electric wiring. Output signals of the various sensors are input to the ECU 10.

The ECU 10 is also connected to the reductant injection valve 4 and the like via electric wiring so that the ECU 10 can control the aforementioned members and portions.

In a selective reduction NOx control, the ECU 10 performs a urea addition control of adding urea as the reductant into exhaust gas that flows into the selective reduction NOx catalyst 3.

In the urea addition control, the ECU 10 determines whether a urea addition control executing condition is met, in predetermined cycles. Examples of the urea addition control executing condition include a condition that the temperature of the selective reduction NOx catalyst 3 determined from the value of output signal (exhaust gas temperature) of the exhaust temperature sensor 9 has reached an activation temperature, and the like.

If it is determined that the aforementioned urea addition control executing condition is met, the ECU 10 adds urea into exhaust gas flowing into the selective reduction NOx catalyst 3 by controlling the reductant injection valve 4 so as to inject the reductant from the reductant injection valve 4.

Specifically, the ECU 10 reads the engine revolution speed, the amount of acceleration operation, the value of output signal of an air flow meter (not shown), etc., from a storage. Furthermore, the ECU 10 accesses a urea addition control map stored in the ECU 10, and computes an amount of urea that needs to be added (target amount of urea addition), using the engine revolution speed, the amount of accelerator operation and the amount of intake air as parameters.

Subsequently, using the target amount of urea addition as a parameter, the ECU 10 accesses a map stored in the ECU 10, and computes an open valve duration of the reductant injection valve 4 that is needed in order to inject the target amount of urea from the reductant injection valve 4 (target open valve duration).

After computing the target open valve duration, the ECU 10 opens the reductant injection valve 4.

The ECU 10 closes the reductant injection valve 4 at the elapse of the target open valve duration following the time point of opening the reductant injection valve 4.

As the reductant injection valve 4 is opened for the target open valve duration as described above, the target amount of urea is injected into the exhaust pipe 2 from the reductant injection valve 4. The urea injected from the reductant injection valve 4 mixes with exhaust gas that flows from an upstream portion of the exhaust pipe 2, and flows into the selective reduction NOx catalyst 3, whereby selective reduction of NOx is performed.

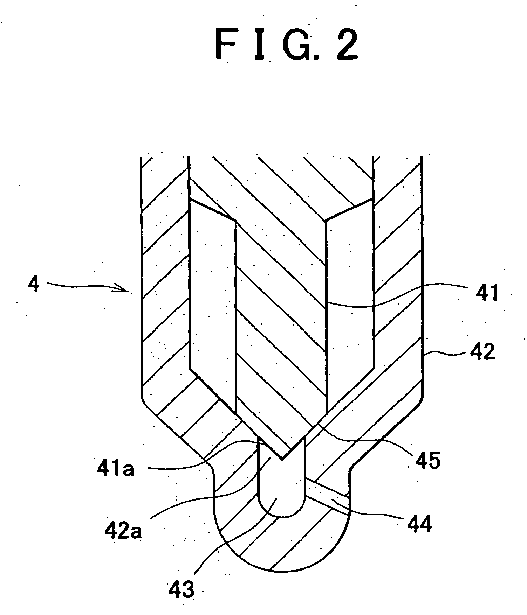

FIG. 2 is a schematic sectional view of an exemplary construction of a distal end portion of the reductant injection valve 4. The reductant injection valve 4 has a case 42, a needle 41 that is contained in the case 42 and moves back and forth based on a signal from the ECU 10, a bag-like sac 43 that temporarily stores the reductant that flows out when the needle 41 is opened, and an injection hole 44 that extends through a portion of the sac 43. In the thus-constructed reductant injection valve 4, a distal end portion 41a of the needle 41 contacts an opening portion 42a of the sac 43 when the reductant is not supplied. Due to contact surfaces 45, flow of the reductant is stopped. When the reductant is to be supplied, the needle 41 is moved apart from the sac 43 in accordance with a signal from the ECU 10, so that the reductant flows into the sac 43. When the pressure of the reductant in the sac 43 becomes higher than the pressure outside the sac 43, the reductant flows into the injection hole 44 so that injection of the reductant from the sac 43 starts.

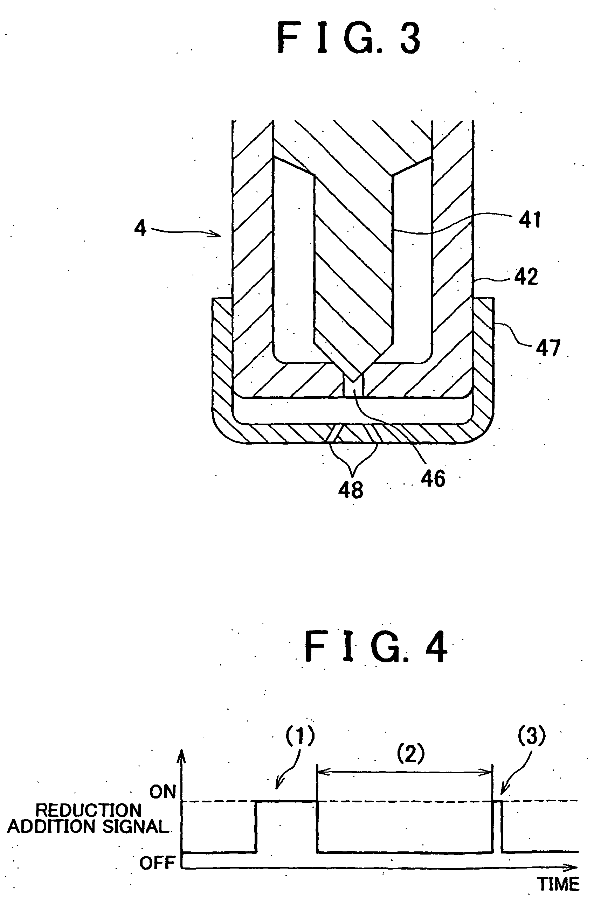

FIG. 3 is a schematic sectional view of another exemplary construction of a distal end portion of the reductant injection valve 4. The reductant injection valve 4 shown in FIG. 3 has a case 42, a needle 41 that is contained in the case 42 and moves back and forth based on a signal from the ECU 10, an injection hole 46 that opens when the needle 41 is opened or moved apart, and a cap 47 that has diffusion holes 48 for diffusing the reductant jetted out of the injection hole 46 into a broad region. In the thus-constructed reductant injection valve 4, a distal end portion of the needle 41 covers the injection hole 46 to stop flow of the reductant when the reductant is not supplied. When the reductant is to be supplied, the needle 41 is moved apart from the injection hole 46 in accordance with a signal from the ECU 10, so that the reductant flows into the injection hole 46. When the reductant ejected from the injection hole 46 reaches the cap 47, the reductant flows into the two diffusion holes 48 formed in the cap, so that the reductant is jetted from the two diffusion holes 48 in different directions.

In some cases, the reductant remains in the sac 43, the injection hole 44, the injection holes 46, the cap 47, the diffusion holes 48, etc., even after injection of the reductant. The residual reductant solidifies due to evaporation of water or the like caused by heat from exhaust gas. If solidified, the reductant cannot be easily removed. Moreover, as solidification of the reductant repeatedly occurs, clogging results, and it becomes difficult to supply the reductant.

In the related-art reductant supply apparatuses, the residual reductant is removed in order to prevent clogging, by injecting water from a reductant supply valve before or after the reductant is supplied. However, provision of a device for injecting water complicates the device construction and increases the size of the device. Furthermore, if a vanadium-loaded catalyst is employed, there is a danger that injected water may elute vanadium, and therefore the catalyst capability may decline.

In this embodiment, the aforementioned problem is solved by removing the reductant deposited in the sac 43, the injection hole 44, the injection holes 46, the cap 47, the diffusion holes 48, etc., before the deposits of the reductant solidify and therefore cause clogging.

Next described will be a method of estimating the timing of clogging of the reductant injection valve 4 in accordance with the embodiment.

FIG. 4 is a time chart indicating time-dependent transition of the reductant addition signal supplied to the reductant injection valve 4. In the case of the reductant injection valve as shown in FIG. 2, when the reductant addition signal turns ON, the needle 41 is moved apart from the sac 43, so that the reductant is injected. When the reductant addition signal turns OFF, the distal end portion 41a of the needle 41 covers the opening portion 42a of the sac 43, thereby stopping the injection of the reductant. In this embodiment, at the elapse of a predetermined time (indicated by (2) in FIG. 4) after the injection of the reductant for the purpose of supplying the reductant to the selective reduction NOx catalyst 3 ((1) in FIG. 4), the injection for removing the reductant deposited in the reductant injection valve 4 is performed ((3) in FIG. 4). The aforementioned predetermined time ((2) in FIG. 4) is a time that elapses before the reductant deposited in the reductant injection valve 4 solidifies. The predetermined time is determined beforehand through experiments or the like, and is pre-stored in the ECU 10. The injection for removing the reductant ((3) in FIG. 4) is performed for a shorter duration of time than the injection for supplying the reductant to the selective reduction NOx catalyst 3 ((1) in FIG. 4). This injection time may be determined beforehand through experiments or the like.

The reductant injected in order to remove the reductant prior to the solidification thereof deposits in the reductant injection valve 4. Therefore, solidification of the reductant is substantially prevented by injecting a small amount of the reductant at every predetermined time.

Thus, by injecting a small amount of the reductant prior to solidification of the reductant, fixation of the reductant onto the reductant injection valve can be substantially prevented, and therefore, the clogging of the reductant injection valve can be substantially prevented.

Although the embodiment has been described in conjunction with addition of urea to the selective reduction NOx catalyst, it is also possible to use a reductant other than urea. It is also possible to add hydrocarbon (e.g., light oil) to the selective reduction NOx catalyst.

### <SECOND EMBODIMENT>

In this embodiment, the clogging due to solidification of the reductant is substantially prevented by injecting a small amount of the reductant when the integrated value of the temperature of exhaust gas following the last injection of the reductant becomes equal to or greater than a predetermined value.

The internal combustion engine 1 and other hardware constructions to which this embodiment is applied are basically the same as those of the first embodiment, and will not be described below

The time needed for solidification of the reductant deposited in the reductant injection valve 4 decreases as the exhaust gas temperature increases. The time for solidification of deposited reductant decreases with increases in the time of exposure of the reductant to high-temperature exhaust gas. However, since the exhaust gas temperature changes depending on the engine operational condition, it is difficult to estimate the timing of occurrence of clogging due to solidification of the reductant only from the exhaust gas temperature detected at a certain time point. In this embodiment, therefore, the exhaust gas temperature is integrated, and it is estimated that the reductant will solidify and clogging will occur if the integrated value becomes equal to or greater than a predetermined value. Before the estimated occurrence of clogging, a small amount of the reductant is injected in order to prevent the clogging of the reductant injection valve 4.

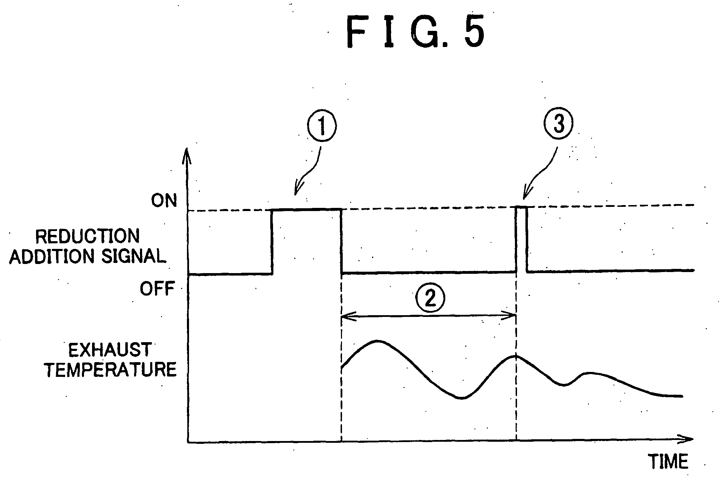

FIG. 5 is a time chart indicating time-dependent transitions of the reductant addition signal supplied to the reductant injection valve 4 and the temperature of exhaust gas. In this embodiment, an integrated value of exhaust gas temperature is determined on the basis of the output signal of the exhaust temperature sensor 9 provided near the reductant injection valve 4.

In this embodiment, when the integrated value of exhaust gas temperature reaches a predetermined value (indicated by (2) in FIG. 5) after performance of injection to supply the reductant to the selective reduction NOx catalyst 3 ((1) in FIG. 5), the reductant is injected in order to remove the reductant deposited on the reductant injection valve 4 ((3) in FIG. 5). The aforementioned integrated value of exhaust gas temperature is a value obtained by integrating multiplication products of exhaust gas temperature and the time of continuation of the temperature. The aforementioned predetermined value is a value that occurs before solidification of the reductant on the reductant injection valve 4, and is determined beforehand through experiments or the like, and is pre-stored in the ECU 10.

The injection for removing the reductant ((3) in FIG. 5) is accomplished within a shorter time than the injection for supplying the reductant to the selective reduction NOx catalyst 3 ((1) in FIG. 5). The duration of injection may be determined beforehand through experiments or the like.

The reductant injected in order to remove the reductant before it solidifies deposits in the reductant injection valve 4. Therefore, solidification of the reductant is substantially prevented by injecting a small amount of the reductant when the integrated value of exhaust gas temperature following the injection for removal of the reductant reaches the predetermined value.

Thus, by injecting a small amount of the reductant prior to solidification of the reductant, fixation of the reductant onto the reductant injection valve can be substantially prevented, and therefore, the clogging of the reductant injection valve can be substantially prevented.

### <THIRD EMBODIMENT>

In this embodiment, the timing of injecting the reductant is determined on the basis of the amount of flow of exhaust gas and the integrated value of exhaust gas temperature following the last injection of the reductant. At that timing, a small amount of the reductant is injected so as to prevent solidification of the reductant and therefore prevent clogging.

The internal combustion engine 1 and other hardware constructions to which this embodiment is applied are basically the same as those of the first embodiment, and will not be described below.

Depending on the amount of flow of exhaust gas and the integrated value of exhaust gas temperature following the injection of the reductant from the reductant injection valve, the amount of the reductant drawn out from the sac 43, the injection hole 44, the injection hole 46, the cap 47, the diffusion holes 48, etc. changes, and therefore, the amount of the residual reductant changes. As the amount of residual reductant deposits increases, the time needed for evaporation of moisture and the like increases. That is, there is a correlation between the integrated value of exhaust gas temperature following the injection of the reductant from the reductant injection valve 4 and the timing of clogging of the reductant injection valve 4.

In this embodiment, therefore, the timing when the clogging will occur as a result of solidification of the reductant is computed on the basis of the amount of flow of exhaust gas and the integrated value of exhaust gas temperature following the last injection of the reductant. Prior to the computed timing, a small amount of the reductant is injected so as to substantially prevent the clogging. The exhaust gas temperature is determined from the output signal of the exhaust temperature sensor 9. The integrated value of exhaust gas temperature is a value obtained by integrating multiplication products of exhaust gas temperature and the time of continuation of the temperature. The amount of flow of exhaust gas is computed from the output signal of an air flow meter (not shown) that measures the amount of intake air. A relationship among the integrated value of exhaust gas temperature, the amount of flow of exhaust gas and the timing of occurrence of reductant clogging is determined beforehand through experiments or the like, and a map of the relationship is prepared. Using the map, the timing of occurrence of clogging is computed from the integrated value of exhaust gas temperature and the amount of flow of exhaust gas.

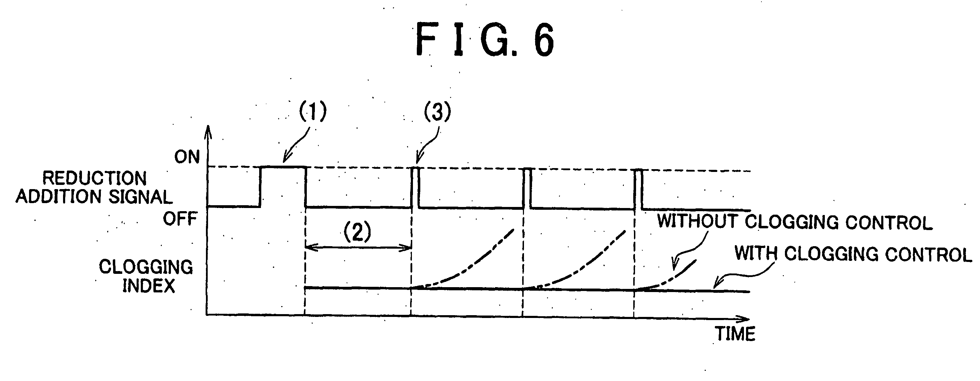

**FIG. 6** is a time chart indicating time-dependent transitions of the reductant addition signal supplied to the reductant injection valve 4 and the clogging index. The clogging index is a value that indicates the degree of solidification of the reductant, and is computed from the aforementioned map.

In this embodiment, a clogging prevention control is performed in which the injection of the reductant (indicated by (3) in FIG. 6) for removing the deposited reductant from the reductant injection valve 4 is conducted during a period ((2) in FIG. 6) prior to a rise in the clogging index ((2) in FIG. 6) that occurs after the injection ((1) in FIG. 6) for supplying the reductant to the selective reduction NOx catalyst 3.

The injection for removing the reductant ((3) in FIG. 6) is accomplished within a shorter time than the injection for supplying the reductant to the selective reduction NOx catalyst 3 ((1) in FIG. 6). The duration of the injection may be determined beforehand through experiments or the like.

The reductant injected in order to remove the deposited reductant from the reductant injection valve 4 deposits on the reductant injection valve 4. Therefore, from the present exhaust gas temperature and the present amount of flow of exhaust gas, a timing of solidification of the reductant is newly computed. Then, a small amount of the reductant is accordingly injected so as to substantially prevent solidification of the reductant.

Thus, by injecting a small amount of the reductant prior to solidification of the reductant, fixation of the reductant onto the reductant injection valve can be substantially prevented, and therefore, the clogging of the reductant injection valve can be substantially prevented.

### <FOURTH EMBODIMENT>

In this embodiment, a timing of clogging of the reductant injection valve 4 is estimated from the integrated value of heat quantity that the reductant remaining in the sac 43 receives after the last injection of the reductant. Before the estimated timing, a small amount of the reductant is injected so as to prevent the clogging of the reductant injection valve 4.

The internal combustion engine 1 and other hardware constructions to which this embodiment is applied are basically the same as those of the first embodiment, and will not be described below.

If the capacity of the sac 43 present at the time of stop of injection of the reductant (hereinafter, referred to as "dead volume") is greater, the amount of reductant remaining after injection of the reductant is greater. Increases in the amount of reductant residues result in increases in the time needed for solidification of the reductant residues due to increases in the time needed for evaporation of moisture and the like contained in the reductant.

The time needed for solidification of the reductant remaining in the sac 43 decreases with increases in the heat quantity that the reductant receives. Therefore, there is a correlation between the heat quantity that the reductant in the sac 43 receives and the timing of occurrence of clogging of the reductant injection valve 4. However, since the exhaust gas temperature fluctuates depending on the engine operation conditions, it is difficult to estimate the timing of clogging only from the exhaust gas temperature that occurs at a certain time point. In this embodiment, therefore, the heat quantity received by the reductant in the sac 43 is estimated on the basis of the exhaust gas temperature, the dead volume, the specific heats of the reductant and the sac 43, etc. If the heat quantity becomes equal to or greater than a predetermined value, it is estimated that the clogging will occur due to solidification of the reductant. Before the clogging occurs, a small amount of the reductant is injected. In this manner, the clogging of the reductant injection valve 4 is substantially prevented. In this embodiment, a map regarding the heat quantity that the reductant receives may be prepared beforehand, for example, through experiments in which the heat quantity is determined using the history of exhaust gas temperature and the dead volume as parameters. The dead volume is constant, and therefore can be determined beforehand. The history of exhaust gas temperature can be determined from the output signal of the exhaust temperature sensor 9.

If the heat quantity received by the reductant in the sac 43 after a stop of injection of the reductant reaches a predetermined value, a small amount of the reductant is injected. The predetermined value is a value of heat quantity that occurs prior to solidification of the reductant, and is determined beforehand through experiments or the like, and is pre-stored in the ECU 10.

The reductant injected in order to remove the reductant from the sac 43 remains in the sac 43. Therefore, every time the heat quantity received by the reductant in the sac 43 reaches the predetermined value, a small amount of the reductant is injected so as to prevent the clogging of the reductant injection valve 4.

Thus, by injecting a small amount of the reductant prior to solidification of the reductant, fixation of the reductant onto the reductant injection valve can be substantially prevented, and therefore, the clogging of the reductant injection valve can be substantially prevented.

### <FIFTH EMBODIMENT>

In this embodiment, an amount of leakage of the reductant is estimated on the basis of the output signal of the reductant pressure sensor 8, and a small amount of the reductant is injected so as to prevent the clogging of the reductant injection valve 4 prior to the reductant injection valve clogging timing determined from the estimated amount of leakage of the reductant.

The internal combustion engine 1 and other hardware constructions to which this embodiment is applied are basically the same as those of the first embodiment, and will not be described below.

The needle 41 receives the pressure of the reductant present in the reductant supply passage 7. Increases in the pressure of the reductant increase the force that presses the distal end portion 41 a of the needle 41 against the opening portion 42a of the sac 43, and therefore decrease the amount of the reductant that leaks via the contact surfaces 45. Furthermore, the time that elapses before the clogging occurs due to solidification of the reductant changes depending on the amount of the reductant. Therefore, there is a correlation among the integrated value of pressure of the reductant, the amount of leakage of the reductant, and the timing of occurrence of clogging of the reductant injection valve 4. In this embodiment, the timing of occurrence of clogging of the reductant injection valve 4 is determined on the basis of the output signal of a reductant pressure sensor that is provided upstream of the needle 41.

The pressure of the reductant is determined from the output signal of the reductant pressure sensor 8. The integrated value of pressure of the reductant is determined as a value obtained by integrating multiplication products of pressure of the reductant and the time of continuation of the pressure. If the integrated value of pressure of the reductant becomes equal to or greater than a predetermined value, it is estimated that the clogging will occur as a result of solidification of the reductant. Before the clogging occurs, a small amount of the reductant is injected. In this manner, the clogging of the reductant injection valve 4 is prevented. The predetermined value is a value that occurs while the reductant is not solidified. The value is determined beforehand through experiments or the like, and is pre-stored in the ECU 10.

Thus, it becomes possible to estimate the timing of occurrence of clogging of the reductant injection valve 4. By injecting a small amount of the reductant prior to occurrence of clogging, the clogging of the reductant injection valve can be substantially prevented.

### <SIXTH EMBODIMENT>

In this embodiment, if the reductant injection valve 4 is clogged due to solidification of reductant residues, the solidified reductant is removed by injecting a greater-than-normal amount of the reductant at the next time of supplying the reductant.

The internal combustion engine 1 and other hardware constructions to which this embodiment is applied are basically the same as those of the first embodiment, and will not be described below.

If the reductant injection valve 4 is clogged due to solidification of the reductant, injection of the reductant for the same open valve duration as in the injection operation performed prior to the clogging of the reductant injection valve 4 cannot remove the solidified reductant, and therefore cannot resolve the clogging of the reductant injection valve 4. However, if the amount of the reductant injected is increased by increasing the injection duration from the normal duration, the solidified reductant can be eluted and removed. Therefore, if the clogging of the reductant injection valve 4 is detected, the solidified reductant can be removed by injecting an increased amount of the reductant at the next time of supplying the reductant. In this manner, the clogging of the reductant injection valve 4 can be resolved.

Detection of occurrence of the clogging of the reductant injection valve 4 may be made possible by, for example, providing a NOx sensor (not shown) capable of measuring the concentration of NOx in exhaust gas, downstream of the selective reduction NOx catalyst 3. That is, if clogging occurs in the reductant injection valve 4, the reductant is injected only in a small amount, so that the amount of NOx reduced on the selective reduction NOx catalyst 3 decreases, and the amount of NOx that flows downstream of the selective reduction NOx catalyst 3 increases. Therefore, if the NOx concentration actually determined from the NOx sensor is at least a predetermined amount higher than the NOx concentration at the time of supplying the reductant while the reductant injection valve 4 is not clogged, it is possible to determine that clogging of the reductant injection valve 4 has occurred.

Urea decomposes, and changes in property, depending on temperature. Therefore, the amount of the reductant injected may be changed on the basis of the history of exhaust gas temperature.

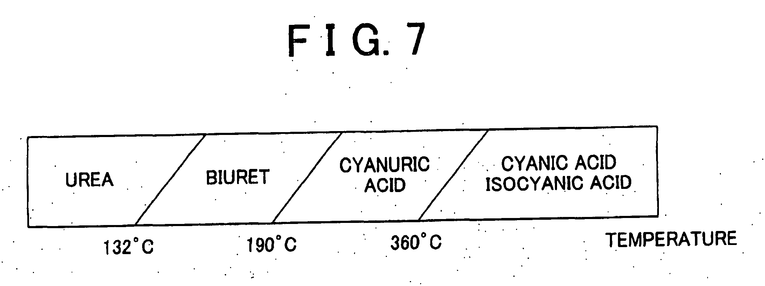

FIG. 7 is a diagram indicating a relationship between temperature and the substances into which urea changes depending on temperature. As indicated in FIG. 7, urea thermally decomposes into substances that vary depending on temperature. The substances into which urea decomposes also vary depending on the rate of heating urea. Therefore, it is possible to estimate which substance urea is decomposed into based on the output signal of the exhaust temperature sensor 9, and correspondingly change the reductant injection duration. The reductant injection duration may also be changed on the basis of the temperature of exhaust gas.

In a case where light oil is used as a reductant, the rate of occurrence of clogging changes depending on temperature. In the case of light oil being used as a reductant, the reductant is likely to solidify and cause the clogging in the temperature range of 150°C to 350°C. Therefore, if the temperature of exhaust gas enters this range after injection of the reductant, an increased amount of reductant may be injected in the next injecting operation.

Furthermore, if the clogging of the reductant injection valve 4 is detected, the pressure of the reductant for injection may be increased instead of increasing the amount of injection of the reductant. An increased pressure of the reductant will remove the solidified reductant from the reductant injection valve 4, and therefore will resolve the clogging of the reductant injection valve 4.

Raising the pressure of the reductant becomes feasible if the set pressure of the pressure regulator 12 is made variable. The pressure regulator 12 operates in response to a signal from the ECU 10, and changes the valve-opening pressure, thus raising the pressure in the reductant supply passage 7.

Thus, even if the clogging of the reductant injection valve 4 occurs, the solidified reductant can be removed to resolve the clogging of the reductant injection valve 4, by increasing the amount of injection of the reductant or increasing the pressure of the reductant.

The reductant supply apparatus in accordance with the invention is able to estimate the timing of occurrence of clogging in the reductant supply apparatus. The clogging in the reductant supply apparatus can be avoided by injecting the reductant before the clogging occurs.

According to the reductant supply apparatus of the invention, the reductant solidified in the reductant supply apparatus can be removed, and therefore the clogging of the nozzle can be resolved.

There is provided a reductant supply system which includes a NOx catalyst (3) that is provided in an exhaust passage of an internal combustion engine (1) and that facilitates reduction of nitrogen oxides in the presence of a reductant, and a reductant supply device (4) that supplies the reductant to the NOx catalyst (3). The reductant supply system further includes clogging estimation means (10) for estimating a clogging timing at which an injection hole (44, 46) of the reductant supply device (4) is clogged, and clogging control means (4, 10) for controlling the clogging of the injection hole (44, 46) by injection of the reductant from the reductant supply device (4) in accordance with the clogging timing estimated by the clogging estimation means (10). Therefore, the clogging of the injection hole (44, 46) of the reductant supply device (4) or the like is prevented.

While the invention has been described with reference to exemplary embodiments thereof, it is to be understood that the invention is not limited to the exemplary embodiments or constructions. To the contrary, the invention is intended to cover various modifications and equivalent arrangements.

## Claims

1. A reductant supply system comprising a NOx catalyst (3) that is provided in an exhaust passage of an internal combustion engine (1) and that facilitates reduction of a nitrogen oxide in the presence of a reductant; a reductant supply device (4) that supplies the reductant to the NOx catalyst (3);
clogging estimation means (10) for estimating a clogging timing at which an injection hole (44, 46) of the reductant supply device (4) is clogged; and
clogging control means (4, 10) for controlling the clogging of the injection hole (44, 46) by injection of the reductant from the reductant supply device (4) in accordance with the clogging timing estimated by the clogging estimation means (10), wherein prior to the clogging timing reductant is injected so that the injection hole (44,46) will not be clogged.

2. The reductant supply system according to claim 1, **characterized in that** the clogging control means (4, 10) injects a small amount of the reductant for substantially preventing the clogging of the injection hole (44, 46) prior to the clogging timing.

3. The reductant supply system according to claim 1, **characterized in that** the clogging control means (4, 10) comprises clogging resolving means for injecting an amount of the reductant that is greater than a usual amount if the reductant is supplied after the clogging timing.

4. The reductant supply system according to claim 1, **characterized in that** the clogging control means (4, 10) comprises clogging resolving means (4, 10) for injecting the reductant at a pressure that is higher than a usual pressure if the reductant is supplied after the clogging timing.

5. The reductant supply system according to any one of claims 1 through 4, **characterized in that** the clogging estimation means (10) estimates that the injection hole (44, 46) will be clogged, if an elapsed time following a last injection of the reductant from the reductant supply device (4) reaches at least a predetermined time.

6. The reductant supply system according to any one of claims 1 through 4, **characterized by** further comprising:
exhaust gas temperature measurement means (9) for measuring a temperature of exhaust gas; and
exhaust gas temperature integration means for integrating exhaust gas temperatures measured by the exhaust gas temperature measurement means (9),
wherein the clogging estimation means (10) estimates that the injection hole (44, 46) will be clogged, if an integrated value of exhaust gas temperature following a last injection of the reductant from the reductant supply device (4) reaches at least a predetermined value.

7. The reductant supply system according to any one of claims 1 through 4, **characterized by** further comprising:
exhaust gas temperature measurement means (9) for measuring a temperature of exhaust gas;
exhaust gas flow measurement means for measuring an amount of flow of exhaust gas; and
exhaust gas temperature integration means for integrating exhaust gas temperatures measured by the exhaust gas temperature measurement means (9),
wherein the clogging estimation means (10) estimates the clogging of the injection hole (44, 46) based on the amount of flow of exhaust gas and an integrated value of exhaust gas temperature following a last injection of the reductant from the reductant supply device (4) reaches at least a predetermined value.

8. The reductant supply system according to any one of claims 1 through 4, **characterized in:**
**that** the reductant supply device (4) comprises a valve (41) that opens at the time of supply of the reductant so as to deliver the reductant, a sac (43) in which the reductant is temporarily stored after passing through the valve (41), and received heat quantity computation means for computing an integrated value of heat quantity received by the reductant remaining in the sac (43), and
**that** the clogging estimation means (10) estimates that the injection hole (44) will be clogged, if the integrated value of heat quantity received by the reductant remaining in the sac (43) following a last injection of the reductant from the reductant supply device (4) reaches at least a predetermined value.

9. The reductant supply system according to any one of claims 1 through 4, **characterized in:**
**that** the reductant supply device (4) comprises a valve (41) that opens at the time of supply of the reductant so as to deliver the reductant, reductant pressure measurement means (8) for measuring a pressure of the reductant upstream of the valve (41), and reductant pressure integration means (10) for integrating the pressure measured by the reductant pressure measurement means (8), and
**that** the clogging estimation means (10) estimates that the injection hole (44, 46) will be clogged, if the integrated value of the pressure following a last injection of the reductant from the reductant supply device (4) reaches at least a predetermined value.

## Patentansprüche

1. Reduktionsmittelzuführungssystem mit:
einem NOx-Katalysator (3), der in einem Abgaskanal einer Brennkraftmaschine (1) vorgesehen ist und eine Reduktion eines Stickoxides beim Vorhandensein eines Reduktionsmittels erleichtert;
einer Reduktionsmittelzuführungsvorrichtung (4), die das Reduktionsmittel dem NOx-Katalysator (3) zuführt;
einer Verstopfungsschätzeinrichtung (10) zum Schätzen einer Verstopfungszeit, bei der sich ein Einspritzloch (44, 46) der Reduktionsmittelzuführungsvorrichtung (4) verstopft; und
einer Verstopfungssteuereinrichtung (4, 10) zum Steuern der Verstopfung des Einspritzloches (44, 46) durch Einspritzen des Reduktionsmittels aus der Reduktionsmittelzuführungsvorrichtung (4) gemäß der Verstopfungszeit, die durch die Verstopfungsschätzeinrichtung (10) geschätzt ist,
wobei das Reduktionsmittel vor der Verstopfungszeit so eingespritzt wird, dass sich das Einspritzloch (44, 46) nicht verstopft.

2. Reduktionsmittelzuführungssystem gemäß Anspruch 1, **dadurch gekennzeichnet, dass** die Verstopfungssteuereinrichtung (4, 10) eine kleine Menge des Reduktionsmittels einspritzt, um die Verstopfung des Einspritzloches (44, 46) vor der Verstopfungszeit im Wesentlichen zu verhindern.

3. Reduktionsmittelzuführungssystem gemäß Anspruch 1, **dadurch gekennzeichnet, dass** die Verstopfungssteuereinrichtung (4, 10) eine Verstopfungslöseeinrichtung zum Einspritzen einer Menge des Reduktionsmittels aufweist, die größer ist als eine übliche Menge, falls das Reduktionsmittel nach der Verstopfungszeit zugeführt wird.

4. Reduktionsmittelzuführungssystem gemäß Anspruch 1, **dadurch gekennzeichnet, dass** die Verstopfungssteuereinrichtung (4, 10) eine Verstopfungslöseeinrichtung (4,10) zum Einspritzen des Reduktionsmittels mit einem Druck aufweist, der größer ist als ein üblicher Druck, falls das Reduktionsmittel nach der Verstopfungszeit zugeführt wird.

5. Reduktionsmittelzuführungssystem gemäß einem der Ansprüche 1 bis 4, **dadurch gekennzeichnet, dass** die Verstopfungsschätzeinrichtung (10) schätzt, dass das Einspritzloch (44, 46) verstopft wird, falls eine verstrichene Zeit nach einer letzten Einspritzung des Reduktionsmittels aus der Reduktionsmittelzuführungsvorrichtung (4) zumindest eine vorbestimmte Zeit erreicht.

6. Reduktionsmittelzuführungssystem gemäß einem der Ansprüche 1 bis 4, des Weiteren **gekennzeichnet durch**:
eine Abgastemperaturmesseinrichtung (9) zum Messen einer Abgastemperatur; und
eine Abgastemperaturintegrationseinrichtung zum Integrieren der Abgastemperaturen, die **durch** die Abgastemperaturmesseinrichtung (9) gemessen sind,
wobei die Verstopfungsschätzeinrichtung (10) schätzt, dass das Einspritzloch (44, 46) verstopft wird, falls ein integrierter Wert der Abgastemperatur nach einer letzten Einspritzung des Reduktionsmittels aus der Reduktionsmittelzuführungsvorrichtung (4) zumindest einen vorbestimmten Wert erreicht.

7. Reduktionsmittelzuführungssystem gemäß der Ansprüche 1 bis 4, des Weiteren **gekennzeichnet durch**:
eine Abgastemperaturmesseinrichtung (9) zum Messen einer Abgastemperatur;
eine Abgasdurchsatzmesseinrichtung zum Messen eines Abgasdurchsatzes; und
eine Abgastemperaturintegrationseinrichtung zum Integrieren der Abgastemperaturen, die **durch** die Abgastemperaturmesseinrichtung (9) gemessen sind,
wobei die Verstopfungsschätzeinrichtung (10) die Verstopfung des Einspritzloches (44, 46) auf der Grundlage des Abgasdurchsatzes und eines integrierten Wertes der Abgastemperatur nach einer letzten Einspritzung des Reduktionsmittels aus der Reduktionsmittelzuführungsvorrichtung (4) schätzt, der zumindest einen vorbestimmten Wert erreicht.

8. Reduktionsmittelzuführungssystem gemäß einem der Ansprüche 1 bis 4, **dadurch gekennzeichnet,**
**dass** die Reduktionsmittelzuführungsvorrichtung (4) ein Ventil (41), das in der Zeit der Zufuhr des Reduktionsmittels geöffnet wird, um so das Reduktionsmittel zu fördern, ein Reservoir (43), in dem das Reduktionsmittel vorübergehend gespeichert wird, nachdem es durch das Ventil (41) hindurch getreten ist, und eine Berechnungseinrichtung einer aufgenommenen Wärmemenge zum Berechnen eines integrierten Wertes der Wärmemenge aufweist, die durch das Reduktionsmittel aufgenommen wird, welches in dem Reservoir (43) verbleibt, und
**dass** die Verstopfungsschätzeinrichtung (10) schätzt, dass das Einspritzloch (44) verstopft wird, falls der integrierte Wert der Wärmemenge, die durch das in dem Reservoir (43) verbleibende Reduktionsmittel aufgenommen wird, nach einer letzten Einspritzung des Reduktionsmittels auf der Reduktionsmittelzuführungsvorrichtung (4) zumindest einen vorbestimmten Wert erreicht.

9. Reduktionsmittelzuführungssystem gemäß einem der Ansprüche 1 bis 4, **dadurch gekennzeichnet,**
**dass** die Reduktionsmittelzuführungsvorrichtung (4) ein Ventil (42), das in der Zeit der Zufuhr des Reduktionsmittels geöffnet wird, um so dass Reduktionsmittel zu fördern, eine Reduktionsmitteldruckmesseinrichtung (8) zum Messen eines Druckes des Reduktionsmittels stromaufwärts von dem Ventil (41) und eine Reduktionsmitteldruckintegrationseinrichtung (10) zum Integrieren des Druckes aufweist, der durch die Reduktionsmitteldruckmesseinrichtung (8) gemessen ist, und
**dass** die Verstopfungsschätzeinrichtung (10) schätzt, dass das Einspritzloch (44, 46) verstopft wird, falls der integrierte Wert des Druckes nach einer letzten Einspritzung des Reduktionsmittels aus der Reduktionsmittelzuführungsvorrichtung (4) zumindest einen vorbestimmten Wert erreicht.

## Revendications

1. Système de fourniture de réducteur comprenant
un catalyseur de NOx (3) qui est prévu dans un conduit d'échappement d'un moteur à combustion interne (1) et qui facilite la réduction d'un oxyde d'azote en la présence d'un réducteur ;
un dispositif de fourniture de réducteur (4) qui fournit le réducteur au catalyseur de NOx (3) ;
un moyen d'estimation de bouchage (10) pour estimer un moment de bouchage pendant lequel un trou d'injection (44, 46) du dispositif de fourniture de réducteur (4) est bouché ; et
un moyen de commande de bouchage (4, 10) pour commander le bouchage du trou d'injection (44, 46) par l'injection du réducteur à partir du dispositif de fourniture de réducteur (4) selon le moment de bouchage estimé par 1e moyen d'estimation de bouchage (10),
dans lequel, avant le moment de bouchage, le réducteur est injecté de telle sorte que le trou d'injection (44, 46) ne sera pas bouché.

2. Système de fourniture de réducteur selon la revendication 1, **caractérisé en ce que** le moyen de commande de bouchage (4, 10) injecte une petite quantité de réducteur pour empêcher sensiblement le bouchage du trou d'injection (44, 46) avant le moment de bouchage.

3. Système de fourniture de réducteur selon la revendication 1, **caractérisé en ce que** le moyen de commande de bouchage (4, 10) comprend un moyen de résolution de bouchage pour injecter une quantité de réducteur qui est plus grande qu'une quantité habituelle si le réducteur est fourni après le moment de bouchage.

4. Système de fourniture de réducteur selon la revendication 1, **caractérisé en ce que** le moyen de commande de bouchage (4, 10) comprend un moyen de résolution de bouchage (4, 10) pour injecter le réducteur à une pression qui est plus élevée qu'une pression habituelle si le réducteur est fourni après le moment de bouchage.

5. Système de fourniture de réducteur selon l'une quelconque des revendication 1 à 4, **caractérisé en ce que** le moyen d'estimation de bouchage (10) estime que le trou d'injection (44, 46) sera bouché si un laps de temps après une dernière injection du réducteur à partir du dispositif de fourniture de réducteur (4) atteint au moins un temps prédéterminé.

6. Système de fourniture de réducteur selon l'une quelconque des revendication 1 à 4, **caractérisé par** le fait de comprendre en outre :
un moyen de mesure de température des gaz d'échappement (9) pour mesurer une température des gaz d'échappement ; et
un moyen d'intégration de la température des gaz d'échappement pour intégrer les températures des gaz d'échappement mesurées par le moyen de mesure de température des gaz d'échappement (9),
dans lequel le moyen d'estimation de bouchage (10) estime que le trou d'injection (44, 46) sera bouché si une valeur intégrée de la température des gaz d'échappement après une dernière injection du réducteur à partir du dispositif de fourniture de réducteur (4) atteint au moins une valeur prédéterminée.

7. Système de fourniture de réducteur selon l'une quelconque des revendication 1 à 4, **caractérisé par** le fait de comprendre en outre :
un moyen de mesure de température des gaz d'échappement (9) pour mesurer une température des gaz d'échappement ;
un moyen de mesure de l'écoulement des gaz d'échappement pour mesurer une quantité d'écoulement de gaz d'échappement ; et
un moyen d'intégration de la température des gaz d'échappement pour intégrer les températures des gaz d'échappement mesurées par le moyen de mesure de température des gaz échappement (9),
dans lequel le moyen d'estimation de bouchage (10) estime le bouchage du trou d'injection (44, 46) sur la base de la quantité d'écoulement des gaz d'échappement et dans lequel une valeur intégrée de la température des gaz d'échappement après une dernière injection du réducteur à partir du dispositif de fourniture de réducteur (4) atteint au moins une valeur prédéterminée.

8. Système de fourniture de réducteur selon l'une quelconque des revendication 1 à 4, **caractérisé en ce :**
**que** le dispositif de fourniture de réducteur (4) comprend une soupape (41) qui s'ouvre au moment de la fourniture du réducteur de sorte à délivrer le réducteur, un sac (43) dans lequel le réducteur est temporairement stocké après le passage à travers la soupape (41) et un moyen de calcul de la quantité de chaleur reçue pour calculer une valeur intégrée de la quantité de chaleur reçue par le réducteur restant dans le sac (43), et
**que** le moyen d'estimation de bouchage (10) estime que le trou d'injection (44) sera bouché si la valeur intégrée de la quantité de chaleur reçue par le réducteur restant dans le sac (43) après une dernière injection du réducteur à partir du dispositif de fourniture de réducteur (4) atteint au moins une valeur prédéterminée.

9. Système de fourniture de réducteur selon l'une quelconque des revendication 1 à 4, **caractérisé en ce :**
**que** le dispositif de fourniture de réducteur (4) comprend une soupape (41) qui s'ouvre au moment de la fourniture du réducteur de sorte à délivrer le réducteur, un moyen de mesure de pression de réducteur (8) pour mesurer une pression du réducteur en amont de la soupape (41) et un moyen d'intégration de mesure de réducteur (10) pour intégrer la pression mesurée par le moyen de mesure de pression de réducteur (8), et
**que** le moyen d'estimation de bouchage (10) estime que le trou d'injection (44, 46) sera bouché si la valeur intégrée de la pression après une dernière injection du réducteur à partir du dispositif de fourniture de réducteur (4) atteint au moins une valeur prédéterminée.
